# EUROPEAN PATENT SPECIFICATION

(11) **EP 2 554 397 B1**
(45) Date of publication and mention of the grant of the patent: **12.02.2014**
(21) Application number: 11006475.5
(22) Date of filing: 05.08.2011
(51) Int. Cl.: B42D 15/10

(54) **Embossed structure**
Prägestruktur
Structure de gaufrage

(43) Date of publication of application: 06.02.2013
(73) Proprietor: ALLTEC Angewandte Laserlicht Technologie Gesellschaft mit beschränkter Haftung, 23923 Selmsdorf (DE)
(72) Inventor: Slepakov, Aleksandr, 58511 Lüdenscheid (DE)
(74) Representative: Wunderlich, Rainer

(56) References cited:
- WO-A1-2004/030928
- WO-A1-2009/126030
- DE-A1-102006 016 342
- DE-A1-102009 004 128

## Description

The present invention relates in a first aspect to an embossed structure for displaying different images in different viewing directions, according to the preamble of claim 1.

In a second aspect, the invention relates to an embossed structure for displaying different images in different viewing directions, according the preamble of claim 10.

A generic embossed structure on which the inventive embossed structure of claim 1 is based comprises a plurality of grooves, wherein each groove comprises a first side wall for displaying one line of a first image in a first viewing direction, and a second side wall for displaying one line of a second image in a second viewing direction.

An equal embossing structure is the basis for the inventive embossed structure of claim 10, wherein the plurality of grooves is referred to as a first plurality of grooves. That is, an embossed structure being generic to the embossed structure of claim 10 comprises a first plurality of grooves in a first direction, wherein each groove of the first plurality comprises a first side wall for displaying one line of a first image in a first viewing direction, and a second side wall for displaying one line of a second image in a second viewing direction.

Such embossed structures are known from EP 0 650 853 A1.

They are well-suited as a security means, wherein any solid object that is to be protected against counterfeiting can be provided with the embossed structure. The solid objects may be, for instance, coins, medals or plastic cards such as smart cards.

Another field of application of the embossed structures may be displaying information or for entertainment.

The known embossed structures are limited to displaying two different images in different viewing directions.

DE 10 2009 004 128 A1 discloses an embossed structure according to the preamble of claim 1 for safety applications. The embossed comprises grooves on which sidewalls additional layers are applied. With these layers, two different images can be displayed in two different viewing angles. In one embodiment, one picture that comprises three different colours is displayed.

In WO 2004/030928 A1 an embossed structure according to the preamble of claim 10 constituting a security device is described. In one embodiment, a surface of the device is furnished with a macro-embossing on which sidewalls micro-embossings are formed. In this way two different images can be displayed depending on the viewing angle. In another embodiment, two sets of grooves are provided which extend in different directions for jointly displaying one image.

Subject-matter of WO 2009/126030 A1 is an authentication feature which comprises a plurality of ridges on which a number of protrusions are formed. Thus two different images can be displayed depending on the viewing angle.

It is an **object** of the invention to provide an embossed structure capable of displaying more than two different images in more than two different viewing directions with a preferably good contrast between the images.

This objective is solved with an embossed structure having the features of claim 1 and an embossed structure as described in claim 10.

Preferred embodiments are given in the dependent claims as well as in the following description, in particular in connection with the attached figures.

It can be regarded as a basic idea of the invention to provide grooves which are manipulated in three separate regions independently from each other. These regions, namely the two side walls and the bottom section, are adjacent to each other in a direction perpendicular to the direction of the grooves. It is thus possible to display three different points, i.e. pixels, which belong to different pictures.

A core idea of the inventive embossed structure of claim 1 resides in the provision of pits or deepening, which can also be referred to as recesses, in each region of the grooves, that is in the bottom section and the first and second side walls. The individual shape and/or size of each recess correspond to the pixel value of the pixel that is to be displayed with the respective recess.

The images to be displayed may be grey-scale images, i.e., images with pixels whose pixel values constitute brightness levels. The amount of light that is scattered from each first side wall with its recesses in the first viewing direction is then proportional to the brightness levels of the respective pixels of the first image. The same applies analogously to the second side walls with their recesses, and to the bottom sections with their recesses.

The scattering of the light at the recesses into the viewing directions may be understood as any process that redirects light. That is, the light may be reflected and/or diffusely scattered. The light that is scattered is ambient light. The brightness levels of the scattered light for the respective recesses thus depend on the level of the ambient light.

The embossed structure may also be regarded as a relief. The grooves may be referred to as furrows or as a fluting. Each groove displays one line of each respective image. The different pixels of one image line are displayed by the individual recesses along that groove. The image columns are then formed by arranged several grooves next to each other. The grooves are preferably straight and parallel to each other.

The side walls may be understood as straight surfaces which are inclined relative to a normal of the embossed structure, i.e. the direction between the bottom section's deepest point and a top surface of the object. The recesses formed in these straight surfaces may extend across the whole height of the straight surface, resulting in no part of that straight surface being left. Alternatively, the recesses may leave an upper and/or a lower part of the straight surfaces; that is, the recesses may only be formed in a middle region of the straight surfaces.

A white pixel, or a pixel with maximum brightness of one of the images, is displayed by scattering a maximum amount of light in the respective viewing direction. This maximum amount may be achieved by providing no recess at the respective bottom section or side wall. Recesses are then still provided for all other pixels that are not white.

In a preferred embodiment of the invention, each line of each image consists of a plurality of pixels, for displaying the pixels of the respective line, and along each of the bottom section and the first and second side walls a number of recesses corresponding to the number of pixels of one line is provided. A period, i.e. distance, between recesses for displaying one image line is preferably chosen equal to the distance between two grooves. Image lines and image columns are then displayed with the same pitch. The recesses for displaying one image line may be arranged immediately next to each other, that is the length of a recess corresponds to the distance between two recesses.

Alternatively, spaces may be left between neighbouring recesses. At such a space, the respective bottom section or side wall remains unaltered, i.e. no recess is formed in that region. The summed length of such a pair of one recess and one pertaining space may then be common to all pairs of recesses and spaces. In one embodiment, the length of a recess is chosen dependent on the brightness level to be displayed. A bright pixel may then correspond to a short recess with a large space to the next recess. A dark pixel may correspond to a long recess with a short space to the next recess. In this embodiment, the profiles of all recesses belonging to one image may be formed identically. That is, the recesses that display one image may vary only in their lengths but not in their cross-sectional shape.

Alternatively, the cross-sectional shape of the recesses may vary dependent on the brightness of the pixel to be displayed with the respective recess.

For a comparably simple design, the images to be displayed may be black and white images. Then, a recess corresponds to a black pixel of the image, and no recess at a certain region along one of the bottom sections or side walls corresponds to a white pixel.

Alternatively, for displaying black and white images, there may be only two different kinds of recesses corresponding to a black and a white pixel, respectively. These two kinds may vary in the length of the recesses and/or in the cross-sectional shape of the recesses. The bottom section may be provided with two kinds of recesses and the side walls may be provided with two other kinds of recesses.

The profile of a region of the side walls without a recess may form a straight line. With no recess at the bottom section, the profile of one groove may thus have the shape of a "V".

A preferred embodiment of the invention is characterized in that the recesses of the bottom section and of the side walls are each formed as steps.

A step may comprise two straight surfaces. It is preferred that each step of one of the side walls has a ground surface and an inclined surface, and each step of the bottom section has a ground surface and two inclined surfaces. The ground surface of each step may be parallel to an object's top surface in which the embossed structure is formed. An inclined surface may be understood as being at an angle relative the ground surface, which angle is unequal to 90°.

Whereas it is generally also possible to form recesses with a rounded profile, steps advantageously more clearly define the amount of light that is scattered in the respective directions.

A preferable embodiment of the inventive embossed structures is characterized in that the pitch between two grooves is between 0.24mm and 0.36mm, preferably between 0.27mm and 0.33mm, and more preferably equal to 0.3mm. The pitch is to be understood as the distance from a center of one groove to a center of a neighbouring groove. It is generally possible that neighbouring grooves are directly juxtaposed to form an inverted "V" between them. Preferably, however, an even plateau may be formed between two grooves.

In another preferred embodiment of the inventive embossed structure, the ground surfaces of the bottom section have widths between 0.01 mm and 0.1mm, preferably between 0.03mm and 0.07mm and more preferably equal to 0.05mm. The ground surfaces of the first and second side walls may have widths between 0.015mm and 0.035mm, preferably between 0.020mm and 0.030mm and more preferably equal to 0.025mm.

The width may be defined in a direction perpendicular to the long axis of each groove; that is, the width is measured in the same direction as the pitch of neighbouring grooves. A large width may increase the amount of light scattered in a direction perpendicular to the ground surface. This direction may also be referred to as a top view. From the top view, the third image can be seen. A bright pixel of the third image may be formed as a step of the bottom section having a ground surface with a large width. The darker the pixel, the smaller the width. This smaller width may be realised with the inclined surfaces of the step of the bottom section being less inclined, i.e. having a larger tilt angle to a normal of the embossing structure. Additionally or alternatively, a darker pixel of the third image may be realised with a deeper recess to the ground; that is, the inclined surfaces are longer. In still another embodiment, the length of the step in the direction in which the grooves extend is varied according to the pertaining pixel value.

Depending on the concrete design, the brightness perceived from the top view may not only depend on the bottom section and the recess or step thereof. Another determinant for the brightness may be the size of the ground surfaces of the steps of the side walls. These ground surfaces may additionally scatter light into the top view direction. To compensate for this additional light of the side walls, the width of the ground surface of the bottom section may be accordingly reduced such that the desired brightness or grey-scale level is achieved in the top view direction. In other words, the recesses of the bottom section may be formed dependent on the neighbouring recesses of the side walls, to compensate for light scattered from the recesses of the side walls into the top view direction. In other designs, however, the recesses of the side walls may not influence the amount of light scattered in the top view direction.

In another variant of the invention, the dimensions of all steps of a bottom section are identical in their cross-sections. The brightness is then determined via the length of the step, as already described. Analogously, the same applies to the steps of the first side walls and to the steps of the second side walls.

Another preferred embodiment of the invention is characterized in that the depths to the ground surfaces of the bottom sections are between 0.10mm and 0.14mm, preferably between 0.11mm and 0.13mm and more preferably equal to 0.12mm. The depths to the ground surfaces of the first and second side walls may be between 0.05mm and 0.09mm, preferably between 0.06mm and 0.08mm and more preferably equal to 0.07mm. In one embodiment, these depths are varied dependent on the brightness of the respective pixel that is to be displayed. A deeper ground surface of the bottom section and/or the side walls may correspond to a darker pixel, respectively. Due to the inclined surfaces, a deeper ground surface may lead to a smaller width of the ground surface. The depths may be measured from a top surface into which the inventive embossing structures are formed.

According to still another preferred embodiment of the invention, the inclined surfaces of the side walls have inclination angles between 10° and 20°, preferably between 13° and 17°, and more preferably equal to 15°. The inclined surfaces of the bottom section may have inclination angles between 15° and 25°, preferably between 17° and 12°, and more preferably equal to 20°. All angles are measured relative to a normal of the object's surface, i.e. an axis perpendicular to the object's surface in which the embossed structure is formed.

These angles are crucial for separating the display of the different images. An inclined surface of, e.g., the first side wall then influences the amount of light scattered in the first viewing direction from which the first image is seen; the amount of light scattered from the first side wall into the second and third viewing directions is advantageously not or hardly influenced by the recess of that first side wall.

According to another exemplary embodiment of the invention, between each inclined surface of the side walls and a horizontal plane of the object's surface (also referred to as a top surface) in which the embossed structure is formed, an inclined entrance surface is provided, respectively. These inclined entrance surfaces may have inclination angles between 45° and 55°, preferably between 48° and 51 °, and more preferably equal to 49.5°. The inclined entrance surfaces may thus constitute a part of the side walls which is not affected by the recesses. In the embodiment with spaces between the recesses, these spaces may be formed as inclined walls having the same inclination angles as said inclined entrance surfaces.

According to the invention, it is also possible that each recess is formed with two or more steps. Each of these steps then has a ground surface and an inclined surface. The dimensions given above for the ground surface of one step may here correspond to the summed length of the ground surfaces of all steps that constitute one recess. The same applies to the dimensions given for the inclined surface of one step.

In the following, it is referred to the inventive embossed structure for displaying four images.

The above described generic embossed structure further comprises, according to the invention, a second plurality of grooves in a second direction which is transverse to the first direction, the grooves of the second plurality intersect the grooves of the first plurality, each groove of the second plurality comprises a third side wall for displaying one column of a third image in a third viewing direction, a fourth side wall for displaying one column of a fourth image in a fourth viewing direction, and each of the first to fourth side walls comprises recesses which define the amount of light that is scattered in the respective viewing direction corresponding to pixel values of the four images.

Each of the first side wall, the second side wall, the third side wall and the fourth side wall comprises between two intersections of grooves one recess for displaying one pixel of the first image, the second image, the third image and the fourth image, respectively.

With the first and second grooves intersecting each other, the inventive embossed structure may form a pyramidal structure. The two side walls of the first grooves and the two side walls of the second grooves then make up the four sides of a pyramid. That is, the embossing structure may be regarded as a structure with a plurality of pyramids, wherein each pyramid has four side walls. These side walls each display one pixel in a certain viewing direction, wherein the four pixels displayed by one pyramid belong to four different images.

Each of the four images that can thus be displayed is visible from a certain viewing angle at which the other images are not visible. For instance, by tilting the embossed structure to the left, the first image becomes visible. Tilting to the right allows seeing the second image. The third image and the fourth image are visible if the embossed structure is tilted forward or back, respectively. For each of these directions, the respective tilt angle may have the same absolute value. This value depends on the design of the recesses and may be equal to 30°.

Generally, all variants and descriptions of the inventive embossed structure for displaying three images may also apply to the inventive embossed structure for displaying four images. Then, the side walls of the first and second grooves may be formed like the side walls that are described in connection with the inventive embossed structure for displaying three images. In particular, the recesses may be formed identically. Only the bottom section may be omitted in the embossed structure for displaying four images.

The inventive embossed structure for displaying four images may also be referred to as an embossing structure for displaying at least four images. In one embodiment, a fifth image is displayed. To this end, each of the first grooves and the second grooves does comprise a bottom section in which recesses are formed. These recesses define the amount of light scattered in a top view direction from which the fifth image is visible.

Generally, it is sufficient for displaying four images that the first and second grooves, i.e. the grooves of the first and second plurality, respectively, extend transversely to each other. All angles at which the first and second grooves intersect are thus possible. However, it is preferred that the first grooves run perpendicularly to the second grooves. This advantageously results in the four viewing directions being clearly separated.

According to a preferred embodiment of the inventive embossed structure for displaying four images, each recess is formed as a step having a ground surface and an inclined surface. A step may also comprise further surfaces, e.g. a tilted surface between the ground surface and the inclined surface, wherein the slope of the tilted surface is smaller than the slope of the inclined surface.

Preferably, the pitch between two adjacent first grooves is between 0.24mm and 0.36mm, preferably between 0.27mm and 0.33mm and more preferably equal to 0.3mm. The same values may apply to the pitches, that is distances, between two adjacent second grooves.

Furthermore, it is preferred that the inclined surfaces have inclination angles between 15° and 25°, preferably between 18° and 22°, and more preferably equal to 20°. These angles are determined relative to a normal of the object's surface in which the inventive embossed structure is formed. In other words, the angles are determined relative to a normal of a plane formed by the first and second directions of the first and second grooves.

Another preferred embodiment of the inventive embossed structure for displaying four images is characterized in that the ground surfaces have widths between 0.01mm and 0.05mm, preferably between 0.025mm and 0.035mm and more preferably equal to 0.03mm.

It is furthermore preferred that the depths to the ground surfaces are between 0.04mm and 0.12mm, preferably between 0.06mm and 0.09mm and more preferably equal to 0.075mm. The depth to a deepest edge between the first and second side walls may be between 0.06mm and 0.15mm, preferably between 0.08mm and 0.12mm and more preferably equal to 0.1mm. The same depths may be chosen for a deepest edge between the third and fourth side walls of each second groove.

The inventive embossed structure may be produced with laser engravers, milling machines, stamps or etching processes.

The invention further relates to an object which comprises at least one inventive embossed structure. The object may be any solid object, e.g. a metal body such as a coin, or a plastic card such as a smart card, a credit card or an ID card. The inventive embossed structure then serves as a security means to prevent counterfeiting. The object may also be a stamp for striking coins.

The invention is described in greater detail below by reference to preferred embodiments which are illustrated in the attached drawings in which:
- Fig. 1A and 1 B: show a cross-sectional view of an embodiment of an inventive embossed structure for displaying three images; and
- Fig. 2A and 2B: show a cross-sectional view of an embodiment of an inventive embossed structure for displaying four images.

Equivalent components are referred to in all figures with the same reference signs, respectively.

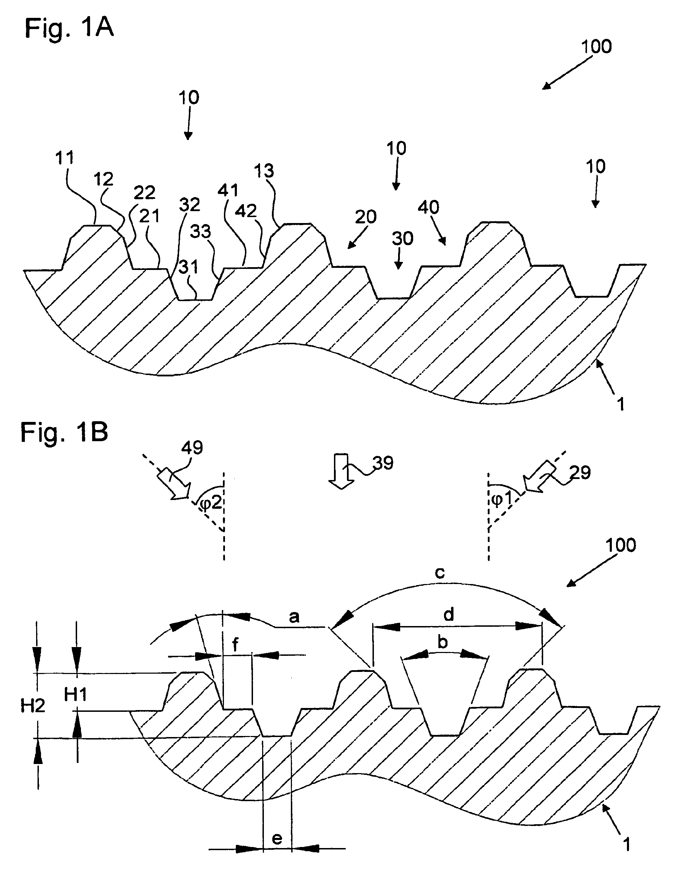

Figs. 1A and 1B show an embodiment of an inventive embossed structure 100 for displaying three images. Both the Figs.1A and 1B show the same embossed structure 100.

The embossing structure 100 is formed in the surface of an object 1 and comprises several grooves 10, three of which are depicted in Figs. 1A and 1B.

Each groove 10 substantially forms a channel which extends into the paper plane. Depicted is thus a cross-sectional view of the grooves 10. Each groove 10 comprises a first side wall 20, a second side wall 40, and a bottom section 30 in between.

The first side wall 20 of each groove 10 displays one line, respectively, of a first image. This image is clearly visible only from a first viewing direction 29. The first viewing direction 29 may form an angle ϕ1 of 30° relative to a normal of the object's surface.

Analogously, each second side wall 40 displays one line of a second image and is clearly visible from a second viewing direction 49 at an angle ϕ2 of, e.g., -30°.

Each bottom section 30 of the grooves 10 displays one line of a third image. This image is clearly visible only from a third viewing direction 39 which may be perpendicular to the object's surface and may thus also be referred to as a top view.

From other viewing angles, only interweaved mixtures of two or three images are visible, that is, the contrast is decreased.

For displaying all pixels of one line of the images, the side walls 20, 40 and the bottom section 30 may each be regarded as consisting of subregions extending along the groove 10. Each subregion then displays one pixel. A pixel has a pixel value indicating its brightness. The shape of the respective subregion is chosen such that an amount of light that is scattered in the viewing direction pertaining to that subregion corresponds to the brightness of the pixel. Depending on the object's surface, the term "scattered" may either be understood as "diffusely scattered" or as "reflected".

According to the brightness of a pixel, the pertaining subregion may either be provided with a recess that reduces the amount of scattered light, or may form a space that remains unaltered.

In the depicted embodiment, each recess is formed as a step consisting of a ground surface 21, 31, 41 and one inclined surface 22, 42 for a step at a side wall 20, 40 or two inclined surfaces 32, 33 for a step at a bottom section 30.

The first side wall 20 further comprises an inclined entrance surface 23 which is formed between the inclined surface 22 of the first side wall 20 and a top surface 11 of the object 1, that is a horizontal surface with no inclination.

Analogously, the second side wall 40 further comprises an inclined entrance surface 43 which is formed between the inclined surface 42 of the second side wall 40 and the top surface 11.

In one embodiment, for displaying a bright pixel, no recess, i.e. no step, is formed in the respective side wall 20, 40 or bottom section 30.

Alternatively, different brightness levels of pixels correspond to different lengths of the pertaining step. The length is measured in a direction along the grooves 10, i.e. into the paper plane. The subregions may then have a common length, wherein the lengths of the steps vary.

In still another embodiment, the dimensions of a step slightly vary according to the brightness level.

Preferred dimensions are given below:

The inclination angle "a" of the inclined surfaces 22, 42 of the steps of the first and second side walls 20, 40 may be 15°. This angle is determined relative to a direction perpendicular to the top surface 11.

The inclination angle of the inclined surfaces 32, 33 of the step of the bottom section 30 may be 20°, determined relative to a direction normal to the top surface 11. That means, the depicted angle "b" between the inclined surfaces 32, 33 amounts to 40°.

The inclination angle of the inclined entrance surfaces 23, 43 may be 44.5°, resulting in the depicted angle "c" between the two inclined entrance surfaces 23, 43 being equal to 99°.

The distance "d" from one groove 10 to the next may be 0.3mm.

The width of the top surface 11 may generally have any value. However, a uniform brightness between the three images may be achieved with the width of the top surface 11 being between 0.1 mm and 0.15mm.

The width "e" of the ground surface 31 of the bottom section 30 may equal 0.05mm.

The width "f" of the ground surfaces 21, 41 of the steps of the side walls 20, 40 may be 0.025mm each.

The depth "H1" to said ground surfaces 21, 41 of the steps of the side walls 20, 40 may be equal to 0.07mm, measured from the top surface 11.

The depth "H2" to the ground surfaces 31 of the bottom section 30 may be 0.12mm, measured again from the top surface 11.

Deviations from these preferred values result in less contrast between the three different images. However, the images are still quite separately visible with deviations up to 20% from the values given above.

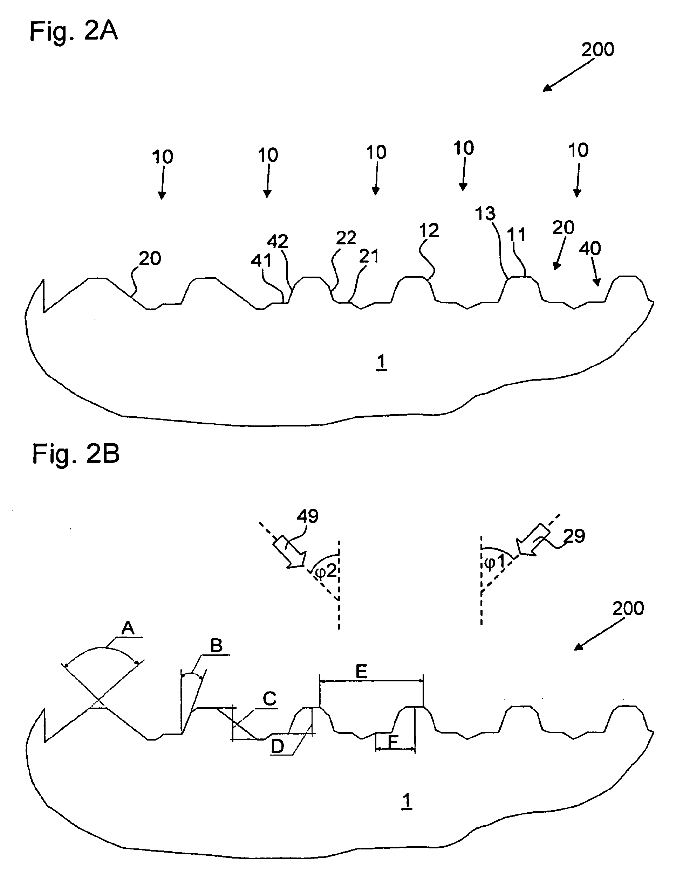

Turning now to Figs. 2A and 2B, a cross-sectional view of an embodiment of an inventive embossed structure 200 for displaying four images is shown. Both the Figs. 2A and 2B show the same embossing structure 200 and differ only in the annotations given.

The embossed structure 200 is formed in the surface of an object 1 and comprises a plurality of first grooves 10, five of which are depicted in Figs. 2A and 2B. Each groove 10 of the first plurality substantially forms a channel which extends into the paper plane.

The embossed structure 200 further comprises a second plurality of grooves (not depicted) which extend transversely, preferably perpendicularly, to the grooves of the first plurality. In the shown example, the grooves of the second plurality thus run from left to right. The grooves of the second plurality may be formed identically to those of the first plurality.

With the grooves of the second plurality being perpendicular to the grooves 10 of the first plurality, intersections of grooves are created. Depicted is a cross-section between two intersections. The embossed structure 200 may also be described as being made up of pyramids which each constitutes the elevation surrounded by two grooves of the first plurality and two grooves of the second plurality.

Each groove 10 of the first plurality has a first side wall 20 and a second side wall 40. These side walls 20, 40 are inclined and may form a "V"-profile. The grooves of the second plurality are formed analogously to those of the first plurality, and thus also comprise two side walls, which will be referred to as a third side wall and a fourth side wall.

The inventive embossed structure 200 displays four different images which can be separately observed dependent on the viewing direction. That means, from a first viewing direction 29 only the first image is visible, from a second viewing direction 49 only the second image is visible, and from a third and a fourth viewing direction (not shown) only a third and a fourth image is visible, respectively. The first viewing direction 29 may form an angle ϕ1 of 30° relative to a normal of the object's surface, wherein the angle ϕ1 is formed in a plane perpendicular to the object's surface and perpendicular to the grooves 10 of the first plurality. The second viewing direction 49 may form an angle ϕ2 of -30° relative to a normal of the object's surface, measured in the same plane as the angle ϕ1. The third and fourth viewing directions may form angles of +30° and -30°, respectively, which are measured in a plane perpendicular to the grooves of the second plurality and perpendicular to the object's surface.

The grooves 10 of the first plurality are substantially formed like the grooves of the embossing structure 100 for displaying three images as described with reference to the Figs. 1A and 1B. The descriptions thereto are thus analogously applicable to the grooves 10 of the first plurality. A difference resides in that the grooves 10 of the first plurality do not require a bottom section with recesses being formed therein. The depicted embossing structure 200 of Figs. 2A and 2B thus does not display another (fifth) image in the top direction.

Depending on pixel values of the four images, recesses are formed in the first to fourth side walls. The recesses along the first side wall are formed corresponding to pixel values of the first image. Analogously, the recesses along the second, third and fourth side walls are formed corresponding to pixel values of the second, third and fourth images, respectively. Each recess displays one pixel wherein the recess, in particular its size and shape, determines the amount of light that is scattered in the respective viewing direction.

In one embodiment, a pixel with maximum brightness corresponds to no recess being formed at the respective position along the respective side wall.

Additionally or alternatively, a recess in one side wall, e.g. the first side wall, mainly influences the amount of light scattered in the pertaining viewing direction, e.g. the first viewing direction, but does also slightly influence the amount of light scattered in the other viewing directions. In this case, recesses of the first the fourth side walls, which recesses are adjacent to each other, are chosen such that the summed amount of light scattered from these four recesses in one viewing direction corresponds to the pixel value to be displayed. As recesses in one side wall still mainly influence the scattering of light in one viewing direction, four different images can be simultaneously displayed in different viewing directions.

In the depicted embodiment, the recesses are formed as steps 21, 22 and 41, 42. A step of the first side wall 20 comprises a ground surface 21 which is horizontal and thus parallel to a top surface 11 of the object 1 into which top surface 11 the inventive embossing structure 200 is formed. The step of the first side wall 20 further comprises an inclined surface 22 which is steeper than the surface of the side wall 20.

As an optional feature, a tilted surface may be provided between the ground surface 21 and the inclined surface 22 of one step. The slope of the tilted surface may be smaller than the slope of the inclined surface 22. That means, the tilted surface has an inclination angle, which is measured relative to an axis perpendicular to the object's surface, that is larger than the inclination angle of the inclined surface 22.

An inclined entrance surface 12 is left at the first side wall 20 between the top surface 11 and the beginning of the recess, i.e. the inclined surface 22.

A step in the second side wall 40 is built correspondingly and thus also comprises a ground surface 41 and an inclined surface 42 wherein an inclined entrance surface 13 is provided between the inclined surface 42 and the top surface 11.

The third and fourth side walls, which are not depicted, are provided with similar steps as recesses.

For displaying grey-scales, i.e. different degrees of brightness, the length of the steps (that is into the paper plane) may be varied. Additionally or alternatively, the concrete dimensions of different steps may be varied. In still another embodiment, either a recess or no recess is provided for displaying a dark or a bright pixel, respectively.

Preferred dimensions of the inventive embossed structure 200 for displaying four images are given below:

The side walls 20, 40 have an inclination angle of 44.5° to a direction normal to the top surface 11. That means, the depicted angle "A" between the first side wall 20 and the second side wall 40 is 99°. Preferably, the same values apply to the inclined entrance surfaces 12, 13.

The inclined surfaces 22, 42 of the steps have an inclination angle "B" of 20° to a direction normal to the top surface 11.

The depth "C" to a deepest point of one groove, i.e. to a center between the first and second side wall 20, 40, is equal to 0.1mm. This depth is measured starting from the top surface 11.

The depth "D" to the ground surface 21, 41 of a step is equal to 0.075mm. This depth is again measured from the top surface 11.

The width of the ground surfaces 21, 41 is 0.03mm.

The distance "E" from one groove to the next parallel groove is equal to 0.3mm.

The distance "F" from a center of one of the top surfaces 11 to a starting point of the ground surface 21, 41 of a step is equal to 0.12mm.

The side walls 20, 40 of one groove may either form a sharp edge at the groove's center or an even bottom plane with a width of up to 0.02mm.

The grooves of the second plurality comprising the third and fourth side walls and the corresponding steps therein are preferably also formed with the dimensions given above.

These values result in an optimum contrast such that only one image is visible from one viewing direction. Still, the images can be displayed with a good contrast if deviations from the values given above do not exceed 20%.

The described embossed structures for displaying three images and for displaying four images advantageously provide an optimum contrast between the displayed images. The embossed structures are preferably used as security means, e.g. against counterfeiting. Objects such as coins, medals or smart cards provided with one of the inventive embossed structures are thus forgery-proof.

## Claims

1. Embossed structure for displaying different images in different viewing directions (29, 39, 49),
the embossed structure comprising a plurality of grooves (10),
wherein each groove (10) comprises
- a first side wall (20) for displaying one line of a first image in a first viewing direction (29),
- a second side wall (40) for displaying one line of a second image in a second viewing direction (49),
each groove (10) further comprises
- a bottom section (30) for displaying one line of a third image in a third viewing direction (39),
the first, second and third images are only clearly visible from the first, second and third viewing directions (29, 39, 49), respectively, whereas interweaved mixtures of two or three images are visible from other viewing angles, **characterized in that** each of the bottom section (30), the first side wall (20) and the second side wall (40) comprises recesses (21, 22, 31, 32, 33, 41, 42) which define the amount of light that is scattered in the respective viewing direction (29, 39, 49) corresponding to pixel values of the three images, wherein depending on a pixel value to be displayed, a size and/or shape of a recess is chosen or no recess is provided, and wherein each recess displays one pixel.

2. Embossed structure according to claim 1,
**characterized in that**
each line of each image consists of a plurality of pixels,
for displaying the pixels of the respective line, along each of the bottom section (30) and the first and second side walls (20, 40) a number of recesses (21, 22, 31, 32, 33, 41, 42) corresponding to the number of pixels of one line is provided.

3. Embossed structure according to claim 1 or claim 2,
**characterized in that**
the recesses (21, 22, 31, 32, 33, 41, 42) of the bottom section (30) and of the side walls (20, 40) are each formed as steps.

4. Embossed structure according to claim 3,
**characterized in that**
each step of one of the side walls (20, 40) has a ground surface (21) and an inclined surface (22), and
each step of the bottom section (30) has a ground surface (31) and two inclined surfaces (32, 33).

5. Embossed structure according to any one of the claims 1 to 4,
**characterized in that**
the pitch (d) between two grooves (10) is between 0.24mm and 0.36mm, preferably between 0.27mm and 0.33mm and more preferably equal to 0.3mm.

6. Embossed structure according to any one of the claims 3 to 5,
**characterized in that**
the ground surfaces (31) of the bottom section (30) have widths (e) between 0.01mm and 0.1mm, preferably between 0.03mm and 0.07mm and more preferably equal to 0.05mm, and
the ground surfaces (21, 41) of the first and second side walls (20, 40) have widths (f) between 0.015mm and 0.035mm, preferably between 0.020mm and 0.030mm and more preferably equal to 0.025mm.

7. Embossed structure according to any one of the claims 3 to 6,
**characterized in that**
the depths (H2) to the ground surfaces (31) of the bottom sections (30) are between 0.10mm and 0.14mm, preferably between 0.11mm and 0.13mm and more preferably equal to 0.12mm, and
the depths (H1) to the ground surfaces (21, 41) of the first and second side walls (20, 40) are between 0.05mm and 0.09mm, preferably between 0.06mm and 0.08mm and more preferably equal to 0.07mm.

8. Embossed structure according to any one of the claims 3 to 7,
**characterized in that**
the inclined surfaces (22, 42) of the side walls (20, 40) have inclination angles (a) between 10° and 20°, preferably between 13° and 17°, and more preferably equal to 15°, and
the inclined surfaces (22, 42) of the bottom section (30) have inclination angles between 15° and 25°, preferably between 17° and 12°, and more preferably equal to 20°.

9. Embossed structure according to any one of the claims 3 to 8,
**characterized in that**
between each inclined surface (22, 42) of the side walls (20, 40) and a horizontal plane (11) of the object's surface in which the embossing structure is formed, an inclined entrance surface (23, 43) is provided, respectively, and the inclined entrance surfaces (23, 43) have inclination angles between 45° and 55°, preferably between 48° and 51°, and more preferably equal to 49.5°.

10. Embossed structure for displaying different images in different viewing directions (29, 49),
the embossing structure comprising a first plurality of grooves (10) in a first direction,
wherein each groove (10) of the first plurality comprises
- a first side wall (20) for displaying one line of a first image in a first viewing direction (29), and
- a second side wall (40) for displaying one line of a second image in a second viewing direction (49),
**characterized in that**
the embossed structure further comprises a second plurality of grooves in a second direction which is transverse to the first direction,
the grooves of the second plurality intersect the grooves (10) of the first plurality,
each groove of the second plurality comprises
- a third side wall for displaying one column of a third image in a third viewing direction,
- a fourth side wall for displaying one column of a fourth image in a fourth viewing direction,
each of the first to fourth side walls (20, 40) comprises recesses (21, 22, 41, 42) which define the amount of light that is scattered in the respective viewing direction corresponding to pixel values of the four images, and wherein each recess displays one pixel.

11. Embossed structure according to claim 10,
**characterized in that**
each recess (21, 22, 41, 42) is formed as a step having a ground surface (21, 41) and an inclined surface (22, 42).

12. Embossed structure according to claim 11,
**characterized in that**
the inclined surfaces (22, 42) have inclination angles (B) between 15° and 25°, preferably between 18° and 22°, and more preferably equal to 20°.

13. Embossed structure according to claim 11 or 12,
**characterized in that**
the ground surfaces (21, 41) have widths between 0.01 mm and 0.05mm, preferably between 0.025mm and 0.035mm and more preferably equal to 0.03mm.

14. Embossed structure according to any one of the claims 11 to 13,
**characterized in that**
the depths (D) to the ground surfaces (21, 41) are between 0.04mm and 0.12mm, preferably between 0.06mm and 0.09mm and more preferably equal to 0.075mm, and
the depth (C) to a deepest edge between the first and second side walls (20, 40), and the depth (C) to a deepest edge between the third and fourth side walls are each between 0.06mm and 0.15mm, preferably between 0.08mm and 0.12mm and more preferably equal to 0.1 mm.

15. Object comprising at least one embossed structure according to any one of the claims 1 to 14.

## Patentansprüche

1. Reliefstruktur zum Darstellen verschiedener Bilder in verschiedenen Betrachtungsrichtungen (29, 39, 49),
wobei die Reliefstruktur eine Mehrzahl an Rillen (10) aufweist,
wobei jede Rille (10)
- eine erste Seitenwand (20) zum Darstellen einer Reihe eines ersten Bildes in einer ersten Betrachtungsrichtung (29) und
- eine zweite Seitenwand (40) zum Darstellen einer Reihe eines zweiten Bildes in einer zweiten Betrachtungsrichtung (49)
aufweist,
wobei jede Rille (10) außerdem
- einen Bodenbereich (30) zum Darstellen einer Reihe eines dritten Bildes in einer dritten Betrachtungsrichtung (39)
aufweist,
wobei das erste, zweite und dritte Bild allein aus der ersten, zweiten beziehungsweise dritten Betrachtungsrichtung (29, 39, 49) klar sichtbar ist, während überlagerte Mischungen von zwei oder drei Bildern aus anderen Betrachtungswinkeln sichtbar sind,
**dadurch gekennzeichnet,**
**dass** der Bodenbereich (30), die erste Seitenwand (20) und die zweite Seitenwand (40) jeweils Vertiefungen (21, 22, 31, 32, 33, 41, 42) aufweisen, welche die Lichtmenge, die in die jeweilige Betrachtungsrichtung (29, 39, 49) gestreut wird, entsprechend Pixelwerten der drei Bilder bestimmen, wobei abhängig von einem darzustellenden Pixelwert eine Größe und/oder Form einer Vertiefung gewählt oder keine Vertiefung vorgesehen ist, und wobei jede Vertiefung einen Pixel darstellt.

2. Reliefstruktur nach Anspruch 1,
**dadurch gekennzeichnet,**
**dass** jede Reihe von jedem Bild aus einer Mehrzahl an Pixeln besteht, dass zum Darstellen der Pixel der jeweiligen Reihe entlang dem Bodenbereich (30) und der ersten und der zweiten Seitenwand (20, 40) jeweils eine Anzahl an Vertiefungen (21, 22, 31, 32, 33, 41, 42) vorgesehen ist, die der Anzahl an Pixeln von einer Reihe entspricht.

3. Reliefstruktur nach Anspruch 1 oder 2,
**dadurch gekennzeichnet,**
**dass** die Vertiefungen (21, 22, 31, 32, 33, 41, 42) von dem Bodenbereich (30) und den Seitenwänden (20, 40) jeweils als Stufen geformt sind.

4. Reliefstruktur nach Anspruch 3,
**dadurch gekennzeichnet,**
**dass** jede Stufe von einer der Seitenwände (20, 40) eine Grundfläche (21) und eine schräge Fläche (22) aufweist und
**dass** jede Stufe von dem Bodenbereich (30) eine Grundfläche (31) und zwei schräge Flächen (32, 33) aufweist.

5. Reliefstruktur nach einem der Ansprüche 1 bis 4,
**dadurch gekennzeichnet,**
**dass** der Abstand (d) zwischen zwei Rillen (10) zwischen 0,24 mm und 0,36 mm, vorzugsweise zwischen 0,27 mm und 0,33 mm, beträgt und besonders bevorzugt gleich 0,3 mm ist.

6. Reliefstruktur nach einem der Ansprüche 3 bis 5,
**dadurch gekennzeichnet,**
**dass** die Grundflächen (31) des Bodenbereichs (30) Breiten (e) zwischen 0,01 mm und 0,1 mm, bevorzugt zwischen 0,03 mm und 0,07 mm und besonders bevorzugt Breiten von 0,05 mm haben und
**dass** die Grundflächen (21, 41) der ersten und der zweiten Seitenwände (20, 40) Breiten (f) zwischen 0,015 mm und 0,035 mm, bevorzugt zwischen 0,020 mm und 0,030 mm und besonders bevorzugt Breiten von 0,025 mm haben.

7. Reliefstruktur nach einem der Ansprüche 3 bis 6,
**dadurch gekennzeichnet,**
**dass** die Tiefen (H2) zu den Grundflächen (31) der Bodenbereiche (30) zwischen 0,10 mm und 0,14 mm, bevorzugt zwischen 0,11 mm und 0,13 mm betragen und besonders bevorzugt gleich 0,12 mm sind und
**dass** die Tiefen (H1) zu den Grundflächen (21, 41) der ersten und der zweiten Seitenwände (20, 40) zwischen 0,05 mm und 0,09 mm, bevorzugt zwischen 0,06 mm und 0,08 mm betragen und besonders bevorzugt gleich 0,07 mm sind.

8. Reliefstruktur nach einem der Ansprüche 3 bis 7,
**dadurch gekennzeichnet,**
**dass** schräge Flächen (22, 42) der Seitenwände (20, 40) Neigungswinkel (a) zwischen 10° und 20°, bevorzugt zwischen 13° und 17° und besonders bevorzugt Neigungswinkel (a) von 15° haben und
**dass** die schrägen Flächen (22, 42) des Bodenbereichs (30) Neigungswinkel zwischen 15° und 25°, bevorzugt zwischen 17° und 12° und besonders bevorzugt Neigungswinkel von 20° haben.

9. Reliefstruktur nach einem der Ansprüche 3 bis 8,
**dadurch gekennzeichnet,**
**dass** zwischen jeder schrägen Fläche (22, 42) der Seitenwände (20, 40) und einer horizontalen Ebene (11) der Oberfläche des Objekts, in welcher die Reliefstruktur gebildet ist, jeweils eine schräge Eingangsfläche (23, 43) vorgesehen ist und
**dass** die schrägen Eingangsflächen (23, 43) Neigungswinkel zwischen 45° und 55°, bevorzugt zwischen 48° und 51° und besonders bevorzugt Neigungswinkel von 49,5° haben.

10. Reliefstruktur zum Darstellen verschiedener Bilder in verschiedenen Betrachtungsrichtungen (29, 49),
wobei die Reliefstruktur eine erste Mehrzahl an Rillen (10) in einer ersten Richtung aufweist,
wobei jede Rille (10) der ersten Mehrzahl
- eine erste Seitenwand (20) zum Darstellen einer Reihe eines ersten Bildes in einer ersten Betrachtungsrichtung (29) und
- eine zweite Seitenwand (40) zum Darstellen einer Reihe eines zweiten Bildes in einer zweiten Betrachtungsrichtung (49)
aufweist, '
**dadurch gekennzeichnet,**
**dass** die Reliefstruktur außerdem eine zweite Mehrzahl an Rillen in einer zweiten Richtung aufweist, welche quer zu der ersten Richtung liegt,
**dass** die Rillen der zweiten Mehrzahl die Rillen (10) der ersten Mehrzahl schneiden,
**dass** jede Rille der zweiten Mehrzahl
- eine dritte Seitenwand zum Darstellen einer Spalte eines dritten Bildes in einer dritten Betrachtungsrichtung und
- eine vierte Seitenwand zum Darstellen einer Spalte eines vierten Bildes in einer vierten Betrachtungsrichtung
aufweist,
**dass** jede der ersten bis vierten Seitenwand (20, 40) Vertiefungen (21, 22, 41, 42) aufweist, welche die Lichtmenge, die in die jeweilige Betrachtungsrichtung gestreut wird, entsprechend Pixelwerten der vier Bilder bestimmen, und wobei jede Vertiefung einen Pixel darstellt.

11. Reliefstruktur nach Anspruch 10,
**dadurch gekennzeichnet,**
**dass** jede Vertiefung (21, 22, 41, 42) als eine Stufe mit einer Grundfläche (21, 41) und einer schrägen Fläche (22, 42) gebildet ist.

12. Reliefstruktur nach Anspruch 11,
**dadurch gekennzeichnet,**
**dass** die schrägen Flächen (22, 42) Neigungswinkel (B) haben, die zwischen 15° und 25°, bevorzugt zwischen 18° und 22° liegen und besonders bevorzugt gleich 20° sind.

13. Reliefstruktur nach Anspruch 11 oder 12,
**dadurch gekennzeichnet,**
**dass** die Grundflächen (21, 41) Breiten zwischen 0,01 mm und 0,05 mm, bevorzugt zwischen 0,025 mm und 0,035 mm und besonders bevorzugt Breiten, die gleich 0,03 mm sind, haben.

14. Reliefstruktur nach einem der Ansprüche 11 bis 13,
**dadurch gekennzeichnet,**
**dass** die Tiefen (D) zu den Grundflächen (21, 41) zwischen 0,04 mm und 0,12 mm, bevorzugt zwischen 0,06 mm und 0,09 mm betragen und besonders bevorzugt gleich 0,075 mm sind und
**dass** die Tiefe (C) zu einer tiefsten Kante zwischen der ersten und der zweiten Seitenwand (20, 40) und die Tiefe (C) zu einer tiefsten Kante zwischen der dritten und der vierten Seitenwand jeweils zwischen 0,06 mm und 0,015 mm, bevorzugt zwischen 0,08 mm und 0,12 mm betragen und besonders bevorzugt gleich 0,1 mm sind.

15. Objekt mit mindestens einer Reliefstruktur nach einem der Ansprüche 1 bis 14.

## Revendications

1. Structure de gaufrage pour l'affichage de différentes images dans différentes directions d'observation (29, 39, 49),
la structure de gaufrage comprenant une pluralité de sillons (10),
dans laquelle chaque sillon (10) comprend :
- une première paroi latérale (20) pour afficher une ligne d'une première image dans une première direction d'observation (29),
- une deuxième paroi latérale (40) pour afficher une ligne d'une deuxième image dans une deuxième direction d'observation (49),
chaque sillon (10) comprend en outre :
- une section de fond (30) pour afficher une ligne d'une troisième image dans une troisième direction d'observation (39),
les première, deuxième et troisième images ne sont clairement visibles que depuis les première, deuxième et troisième directions d'observation (29, 39, 49), respectivement, tandis que des mélanges entrelacés de deux ou trois images sont visibles depuis d'autres directions d'observation,
**caractérisée en ce que** :
chacune parmi la section de fond (30), la première paroi latérale (20) et la deuxième paroi latérale (40) comprend des évidements (21, 22, 31, 32, 33, 41, 42) qui définissent la quantité de lumière qui est diffusée dans la direction d'observation respective (29, 39, 49) correspondant aux valeurs de pixel des trois images, dans laquelle la taille et/ou la forme d'un évidement est(sont) choisie(s) en fonction d'une valeur de pixel devant être affichée ou bien aucun évidement n'est prévu, et dans laquelle chaque évidement affiche un pixel.

2. Structure de gaufrage selon la revendication 1,
**caractérisée en ce que** :
chaque ligne de chaque image consiste en une pluralité de pixels, et
pour l'affichage des pixels de la ligne respective, le long de chacune de la section de fond (30) et des première et deuxième parois latérales (20, 40) un certain nombre d'évidements (21, 22, 31, 32, 33, 41, 42) correspondant au nombre de pixels d'une ligne est prévu.

3. Structure de gaufrage selon la revendication 1 ou la revendication 2,
**caractérisée en ce que** :
les évidements (21, 22, 31, 32, 33, 41, 42) de la section de fond (30) et des parois latérales (20, 40) sont chacun formés en tant que paliers.

4. Structure de gaufrage selon la revendication 3,
**caractérisée en ce que** :
chaque palier de l'une des parois latérales (20, 40) présente une surface de base (21) et une surface inclinée (22), et
chaque palier de la section de fond (30) présente une surface de base (31) et deux surfaces inclinées (32, 33).

5. Structure de gaufrage selon l'une quelconque des revendications 1 à 4,
**caractérisée en ce que** :
le pas (d) entre deux sillons (10) est compris entre 0,24 mm et 0,36 mm, de préférence entre 0,27 mm et 0,33 mm, et, avec une nette préférence, est égal à 0,3 mm.

6. Structure de gaufrage selon l'une quelconque des revendications 3 à 5,
**caractérisée en ce que** :
les surfaces de base (31) de la section de fond (30) ont des largeurs (e) comprises entre 0,01 mm et 0,1 mm, de préférence entre 0,03 mm et 0,07 mm, et, avec une nette préférence, égales à 0,05 mm, et
les surfaces de base (21, 41) des première et deuxième parois latérales (20, 40) ont des largeurs (f) comprises entre 0,015 mm et 0,035 mm, de préférence entre 0,020 mm et 0,030 mm, et, avec une nette préférence, égales à 0,025 mm.

7. Structure de gaufrage selon l'une quelconque des revendications 3 à 6,
**caractérisée en ce que** :
les profondeurs (H2) jusqu'aux surfaces de base (31) des sections de fond (30) sont comprises entre 0,10 mm et 0,14 mm, de préférence entre 0,11 mm et 0,13 mm, et, avec une nette préférence, égales à 0,12 mm, et
les profondeurs (H1) jusqu'aux surfaces de base (21, 41) des première et deuxième parois latérales (20, 40) sont comprises entre 0,05 mm et 0,09 mm, de préférence entre 0,06 mm et 0,08 mm, et, avec une nette préférence, égales à 0,07 mm.

8. Structure de gaufrage selon l'une quelconque des revendications 3 à 7,
**caractérisée en ce que** :
les surfaces inclinées (22, 42) des parois latérales (20, 40) ont des angles d'inclinaison (a) compris entre 10° et 20°, de préférence entre 13° et 17°, et, avec une nette préférence, égaux à 15°, et
les surfaces inclinées (22, 42) de la section de fond (30) ont des angles d'inclinaison compris entre 15° et 25°, de préférence entre 17° et 12°, et, avec une nette préférence, égaux à 20°.

9. Structure de gaufrage selon l'une quelconque des revendications 3 à 8,
**caractérisée en ce que** :
entre chaque surface inclinée (22, 42) des parois latérales (20, 40) et un plan horizontal (11) de la surface de l'objet dans laquelle la structure de gaufrage est formée, une surface d'entrée inclinée (23, 43) est prévue, respectivement, et les surfaces d'entrée inclinées (23, 43) ont des angles d'inclinaison compris entre 45° et 55°, de préférence entre 48° et 51 °, et, avec une nette préférence, égaux à 49,5°.

10. Structure de gaufrage pour l'affichage de différentes images dans différentes directions d'observation (29, 49),
la structure de gaufrage comprenant une première pluralité de sillons (10) dans une première direction,
dans laquelle chaque sillon (10) de la première pluralité comprend :
- une première paroi latérale (20) pour afficher une ligne d'une première image dans une première direction d'observation (29), et
- une deuxième paroi latérale (40) pour afficher une ligne d'une deuxième image dans une deuxième direction d'observation (49),
**caractérisée en ce que** :
la structure de gaufrage comprend en outre une deuxième pluralité de sillons dans une deuxième direction qui est transversale à la première direction,
les sillons de la deuxième pluralité présentent des intersections avec les sillons (10) de la première pluralité,
chaque sillon de la deuxième pluralité comprend :
- une troisième paroi latérale pour afficher une colonne d'une troisième image dans une troisième direction,
- une quatrième paroi latérale pour afficher une colonne d'une quatrième image dans une quatrième direction,
chacune des première à quatrième parois latérales (20, 40), comprend des évidements (21, 22, 41, 42) qui définissent la quantité de lumière qui est diffusée dans la direction d'observation respective correspondant aux valeurs de pixel des quatre images, et dans laquelle chaque évidement affiche un pixel.

11. Structure de gaufrage selon la revendication 10,
**caractérisée en ce que** :
chaque évidement (21, 22, 41, 42) est formé en tant que palier présentant une surface de base (21, 41) et une surface inclinée (22, 42).

12. Structure de gaufrage selon la revendication 11,
**caractérisée en ce que** :
les surfaces inclinées (22, 42) ont des angles d'inclinaison (B) compris entre 15° et 25°, de préférence entre 18° et 22°, et, avec une nette préférence, égaux à 20°.

13. Structure de gaufrage selon la revendication 11 ou 12,
**caractérisée en ce que** :
les surfaces de base (21, 41) ont des largeurs comprises entre 0,01 mm et 0,05 mm, de préférence entre 0,025 mm et 0,035 mm, et, avec une nette préférence, égales à 0,03 mm.

14. Structure de gaufrage selon l'une quelconque des revendications 11 à 13, **caractérisée en ce que** :
les profondeurs (D) jusqu'aux surfaces de base (21, 41) sont comprises entre 0,04 mm et 0,12 mm, de préférence entre 0,06 mm et 0,09 mm, et, avec une nette préférence, égales à 0,075 mm, et
la profondeur (C) jusqu'à un bord le plus profond entre les première et deuxième parois latérales (20, 40) et la profondeur (C) jusqu'à un bord le plus profond entre les troisième et quatrième parois latérales sont, chacune, comprises entre 0,06 mm et 0,15 mm, de préférence entre 0,08 mm et 0,12 mm, et, avec une nette préférence, égales à 0,1 mm.

15. Objet comprenant au moins une structure de gaufrage selon l'une quelconque des revendications 1 à 14.
